# EUROPÄISCHE PATENTSCHRIFT

(11) **EP 0 963 284 B1**
(45) Veröffentlichungstag und Bekanntmachung des Hinweises auf die Patenterteilung: **09.06.2004**
(21) Anmeldenummer: 98910706.5
(22) Anmeldetag: 19.02.1998
(51) Int. Cl.: B29C 51/04, B29C 51/34

(54) **VERFAHREN UND VORRICHTUNG ZUR HERSTELLUNG VON VERPACKUNGSBEHÄLTERN AUS KUNSTSTOFF, VERPACKUNGSMASCHINE UND VERPACKUNGSBEHÄLTER**
METHOD AND DEVICE FOR PRODUCING PACKING CONTAINERS FROM PLASTICS, PACKING MACHINE AND PACKING CONTAINER
PROCEDE ET DISPOSITIF DE FABRICATION DE RECIPIENTS D'EMBALLAGE EN PLASTIQUE, MACHINE A EMBALLER ET RECIPIENT D'EMBALLAGE

(30) Priorität: 20.02.1997 DE 19706797
(43) Veröffentlichungstag der Anmeldung: 15.12.1999
(73) Patentinhaber: Kourtoglou S.A. Food Packaging Machinery, 21053 Nea Kios (GR)
(72) Erfinder: KOURTOGLOU, Dimitrios, GR-17124 Nea Smirni (GR); KOURTOGLOU, Ionnis, GR-17124 Nea Smirni (GR)
(74) Vertreter: Grünecker, Kinkeldey, Stockmair & Schwanhäusser Anwaltssozietät
(86) Internationale Anmeldenummer: PCT/EP1998/000960
(87) Internationale Veröffentlichungsnummer: WO 1998/036894

(56) Entgegenhaltungen:
- EP-A- 0 106 425
- EP-A- 0 182 094
- EP-A- 0 564 382
- WO-A-85/03488
- DE-A- 2 261 812
- FR-A- 1 262 380
- FR-A- 1 427 784
- FR-A- 1 554 475
- FR-A- 2 477 948
- US-A- 3 837 782

## Beschreibung

Die Erfindung betrifft ein Verfahren zur Herstellung von befüllten und verschlossenen, mit zumindest einer Hinterschneidung versehenen Verpackungsbehältern aus Kunststoff, einen Kunststoff Verpackungsbehälter, gemäß dem Oberbegriff des Patentanspruches 2 hergestellt nach diesem Verfahren, eine Vorrichtung gemäß dem Oberbegriff des Patentanspruches 4 zur Herstellung solcher Verpackungsbehältern aus Kunststoff, sowie eine Verpackungsmaschine mit einer solchen Vorrichtung.

Die Herstellung von Verpackungsbehältern aus Kunststoff, insbesondere zur Verpackung von Lebensmitteln, weist bisher verschiedene Nachteile auf, die dazu geführt haben, daß rationell hergestellte Kunststoff-Verpackungsbehälter nur in sehr eingeschränkter Formgebung und im allgemeinen ohne Wiederverschlußmöglichkeiten vorhanden sind.

Insbesondere ist es bisher nur möglich gewesen, durch Tiefziehen, Blasformen oder dergleichen, geradwandige, zylindrische oder konische Becher bzw. Behälter herzustellen, die keine Hinterschneidungen aufweisen.

Derartige Behälter erweisen sich hinsichtlich ihrer Stabilität und Standfestigkeit jedoch als schwierig. Außerdem können flüssige Stoffe, wie z.B. pastöse Lebensmittel, in solche Behälter nicht so schnell abgefüllt werden, da die Reaktionskräfte stets dazu neigen, das Verpackungsgut während des Befüllvorganges wieder herauszuspritzen. In geradwandige oder konische Behälter können daher flüssige Stoffe nicht so schnell abgefüllt werden, wie dies wünschenswert und insbesondere auch bei Behältern möglich ist, die hinterschnitten sind und bei denen die Einfüllöffnung im Querschnitt kleiner ist als der übrige Behälterquerschnitt, so daß ein Zurückspritzen oder Herausschleudem vermieden wird.

Verpackungsbehälter, die aus Kunststoffolie hergestellt worden sind, konnten aus herstellungstechnischen Gründen daher nicht Formgebungen übernehmen, wie sie sich als vorteilhaft im Glas- oder Keramikbereich oder bei spritzgegossenen Behältern herausgestellt haben. Überdies ist es bei Verpackungsbehältern, die aus Kunststoffmaterial-Folie hergestellt sind, vielfach nicht möglich, die entsprechenden Einfüllöffnungen wieder dauerhaft zu verschließen, da sie vielfach nur durch eine Einmalgebrauchs-Siegelfolie verschlossen sind, die nach dem Aufreißen nicht wieder dauerhaft verschlossen werden kann.

Verpackungsbehälter, sowie Verfahren und Vorrichtungen zu ihres Herstellung sind in des FR-A-1 262 380, des EP-A-182 094 und des US-A-3 837 782 offenbart.

Der Erfindung liegt daher die Aufgabe zugrunde, ein Verfahren zur Herstellung von Verpackungsbehältern aus Kunststoff der eingangs genannten Art, einen Kunststoff-Verpackungsbehälter der eingangs genannten Art, eine Vorrichtung zur Herstellung von Verpackungsbehältern aus Kunststoff der eingangs genannten Art, sowie eine Verpackungsmaschine der eingangs genannten Art zu schaffen, die eine wesentlich größere Variabilität hinsichtlich der Herstellbarkeit von Verpackungsbehältern, insbesondere für Lebensmittelverpackungen, gestatten und es ermöglichen, die Vorteile herkömmlicher, nicht auf der Basis von Kunststoff-Folie hergestellter Verpackungsbehälter, wie Wiederverschließbarkeit, gute Stand- und Formfestigkeit bei hoher Effizienz in der Herstellung zu vereinen.

Die erfindungsgemäße Aufgabe wird in verfahrenstechnischer Hinsicht durch ein Verfahren mit den Merkmalen des Patentanspruches 1 gelöst. Auf diese Weise können Verpackungsbehälter mit praktisch beliebigem Querschnitt großer Standfestigkeit hergestellt werden, die auch bei reduzierter Wanddicke hervorragende Verpackungseigenschaften aufweisen und z.B. mit Schraubverschlüssen versehen werden können.

Hinsichtlich des Kunststoff-Verpackungsbehälters wird die vorgenannte Aufgabe gelöst durch einen Verpackungsbehälter mit den Merkmalen des Patentanspruches 2.

Eine bevorzugte Ausgestaltungen des Kunststoff-Verpackungsbehälters ist in einem entsprechenden Unteranspruch dargelegt.

In apparatetechnischer Hinsicht wird die erfindungsgemäße Aufgabe durch eine Vorrichtung mit den Merkmalen des Patentanspruches 4 gelöst.

Hinsichtlich der Formstation für einen Kunststoff-Verpackungsbehälter bedeutet dies, daß die Formstation zumindest ein Oberwerkzeug und zumindest ein Unterwerkzeug aufweist, wobei in dem Oberwerkzeug ein axial verlagerbarer Stempel und in dem Unterwerkzeug ein Formhohlraum vorgesehen ist, der Stempel unter Tiefziehen einer Kunststoffolie in den Formhohlraum verlagerbar ist und das Unterwerkzeug lateral geteilt ist, derart, daß die Unterwerkzeug-Formhälften im wesentlichen senkrecht zu einer Bewegungsrichtung des Stempels zum Öffnen und Schließen des Unterwerkzeuges bewegbar sind und wobei eine Druckgas-Zuführungseinrichtung vorgesehen ist, durch die eine Endformgebung des Verpackungsbehälters in dem Formhohlraum durch einen Blasformvorgang, insbesondere durch Druckluftbeaufschlagung vorgesehen ist.

Bevorzugte Ausführungsbeispiele der erfindungsgemäßen Vorrichtung sind in den entsprechenden Unteransprüchen dargelegt.

Hinsichtlich der Verpackungsmaschine wird die erfindungsgemäße Aufgabe durch eine Verpackungsmaschine mit den Merkmalen des Patentanspruches 11 gelöst.

Dabei weist die Verpackungsmaschine eine Kunststoff-Verpackungsbehälter-Formstation, in der aus einer Kunststofffolie in einem kombinierten Tiefzieh-Blasformvorgang ein zumindest eine Hinterschneidung aufweisender Verpackungsbehälter herstellbar ist, eine Füllstation zum Befüllen des Verpackungsbehälters mit einem Verpackungsgut, eine Siegelstation zum Versiegeln einer Einfüllöffnung des Verpackungsbehälters, eine Trennstation zum Individualisieren der Verpackungsbehälter und eine Abgabestation für die befüllten und versiegelten Verpackungsbehälter, auf.

Damit ist es in vorteilhafter Weise möglich, in einer kompakten Verpackungsmaschineneinheit z. B. verpackte Lebensmittel herzustellen, wobei eingangsseitig kontinuierlich die Kunststofffolie als Halbzeug zur Ausbildung des Verpackungsbehälters in der Formstation zugeführt wird, während abgabeseitig das individuell in die einzelnen Verpackungsbehälter verpackte Verpackungsgut die Verpackungsmaschine verläßt.

Weitere, bevorzugte Ausgestaltungen der erfindungsgemäßen Vorrichtung sind in den entsprechenden weiteren Unteransprüchen dargelegt.

Die Erfindung wird nachstehend anhand von Ausführungsbeispielen und zugehörigen Zeichnungen näher erläutert. In diesen zeigen:
- Fig. 1: eine schematische Prinzipskizze der Arbeitsweise und der Anordnung der Stationen einer Verpackungsmaschine nach einem Ausführungsbeispiel,
- Fig. 2a bis 2e: schematische Querschnittsdarstellungen der Arbeitsweise von Ober- und Unterwerkzeug in einer Formstation einer Verpackungsmaschine zur Herstellung eines Verpackungsbehälters,
- Fig. 3: eine perspektivische Schrägansicht eines Unterwerkzeuges der Formstation nach einem ersten Ausführungsbeispiel,
- Fig. 4a bis 4c: eine Vorderansicht, eine Draufsicht und eine Seitenansicht des Unterwerkzeuges nach Fig. 3,
- Fig. 5: eine perspektivische Schrägansicht eines Unterwerkzeugs, das in einem Säulenführungsgestell der Formstation aufgenommen ist, nach einem weiteren Ausführungsbeispiel,
- Fig. 6: eine Vorderansicht nach Fig. 5,
- Fig. 7: eine Draufsicht nach Fig. 6,
- Fig. 8a: eine Teildarstellung nach Fig. 7 mit Angabe eines Schnittverlaufes, wobei das Unterwerkzeug in geschlossenem Zustand dargestellt ist,
- Fig. 8b: eine Schnittdarstellung nach Fig. 8a,
- Fig. 9: eine vergrößerte Darstellung der Einzelheit A nach Fig. 8,
- Fig. 10: eine Teil-Darstellung ähnlich derjenigen in Fig. 8 mit Angabe eines Schnittverlaufes, wobei das Unterwerkzeug sich jedoch in geöffnetem Zustand befindet;
- Fig. 11: eine Schnittdarstellung gemäß Fig. 10,
- Fig. 12: eine vergrößerte Darstellung der Einzelheit B in Fig. 11,
- Fig. 13: eine Teildarstellung ähnlich derjenigen in den Fig. 8 und 10 für das Unterwerkzeug in geöffnetem Zustand mit verändertem Schnittverlauf,
- Fig. 14: eine Schnittdarstellung nach Fig. 13,
- Fig. 15: eine vergrößerte Darstellung der Einzelheit betreffend die Steuerschablone für die Öffnungs- und Schließbewegung des Unterwerkzeuges nach Fig. 14, und
- Fig. 16a bis 16c: Ausführungsbeispiele von Verpackungsbehältern.

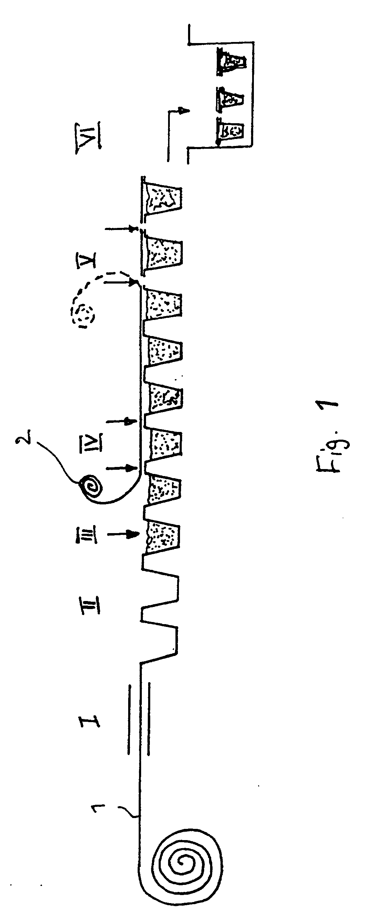

Fig. 1 verdeutlicht eine Prinzipskizze des Arbeitsverfahrens der Verpackungsmaschine, die im Anschluß an eine Folien-Vorwärmstation 1 integral eine Formstation II zum Ausformen der Verpackungsbehälter, anschließend eine Füllstation III, gefolgt von einer Heißsiegelstation IV, einer Schneidstation V, in der die befüllten und gesiegelten Verpackungsbehälter individualisiert werden, sowie einer Abgabe- und Verpackungsstation VI, aufweist.

Von der Aufgabeseite der Verpackungsmaschine her wird eine hinreichend formstabile und tiefziehbare Verpackungsfolie, vorzugsweise aus thermoplastischem Kunststoff, zugeführt und in der Vorwärmstation I z.B. durch Infrarotstrahlung erhitzt. Anschließend erfolgt in der Formstation II das Ausbilden des Verpackungsbehälters durch eine kombinierte Tiefzieh-Blasform-Formgebung, wie anhand der nachfolgend noch genauer beschriebenen werkzeugtechnischen Konfiguration der Formstation erläutert wird.

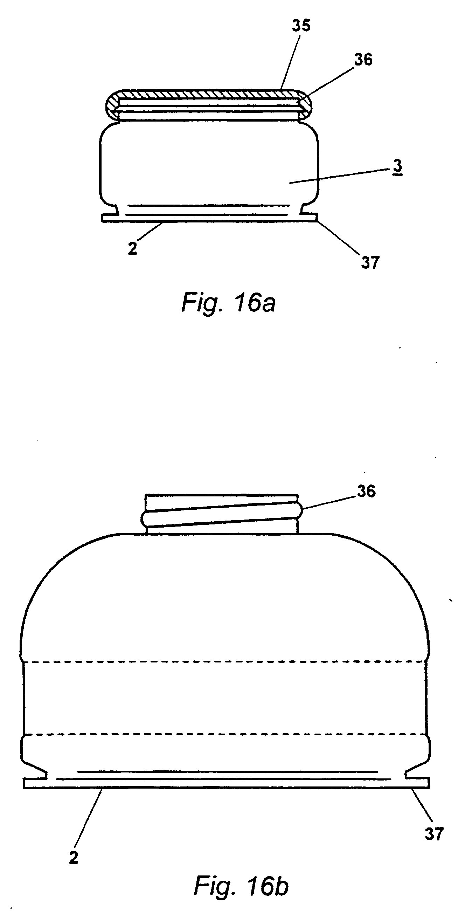

Die so als Vertiefungen in der kontinuierlichen Verpackungsfolie ausgebildeten Halbzeug-Verpackungsbehälter können aufgrund ihres fortbestehenden Materialzusammenhanges leicht durch die Verpackungsmaschine weitertransportiert werden und gelangen in die Füllstation, wo die Verpackungsbehälter mit einem Verpackungsgut beliebiger Art, vorzugsweise von Lebensmitteln, befüllt werden. Nur der Einfachheit der Darstellung halber sind die Vorratsbehälter 3 in Fig. 1 schematisch als einfache konische Körper ohne Hinterschneidungen dargestellt. Tatsächlich entsprechen die Formen Behältern wie z.B. in Fig. 16a bis 16c gezeigt.

Anschließend werden die befüllten Verpackungsbehälter unter Wahrung ihres Materialzusammenhanges weitertransportiert zu einer Heißsiegelstation, wobei ein Verschließen der gefüllten Verpackungsbehälter durch Aufbringen einer Heißsiegelfolie 2 (z.B. einer Aluminium-Kunststoff-Verbundfolie) erfolgt

Wie schematisch in Fig. 1 dargestellt ist, erfolgt vorzugsweise die Zuführung von oben von einem Vorratswickel her in Verbindung mit einem hier nicht näher dargestellten Heißsiegelstempel.

Anschließend erfolgt in der Schneidstation das Ausstanzen der Decketform aus der Heißsiegelfolie unter gleichzeitigem Durchtrennen des Materialzusammenhanges zwischen benachbarten Verpackungsbehältern, so daß sowohl die Heißsiegelfolie 2 als auch die Verpackungsfolie 1 durchtrennt werden.

Die befüllten und verschlossenen Verpackungsbehälter werden anschließend zur Abgabestation und Verpackung zu Paletten oder in Behälter abgeführt.

Gegebenenfalls kann auch ein weiterer Deckel, z.B. ein Schraubdeckel, auf den versiegelten und befüllten Verpackungsbehälter aufgesetzt werden.

Wesentlich für die besondere Variabilität und Konfiguration der Verpackungsbehälter ist die Ausbildung der Formstation 11, die nachfolgend in ihrem werkzeugtechnischen Aufbau genauer erläutert wird.

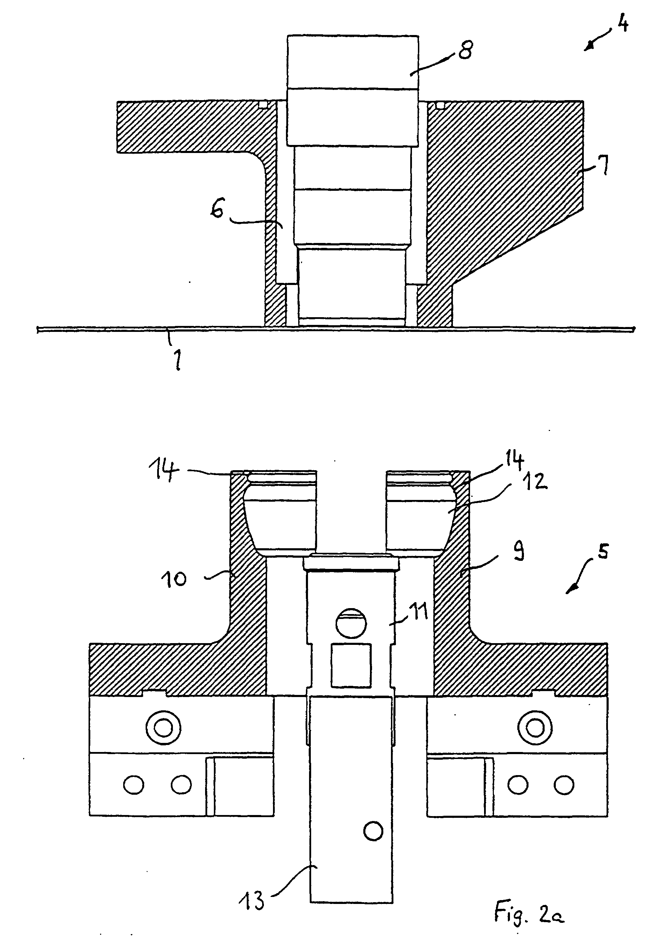

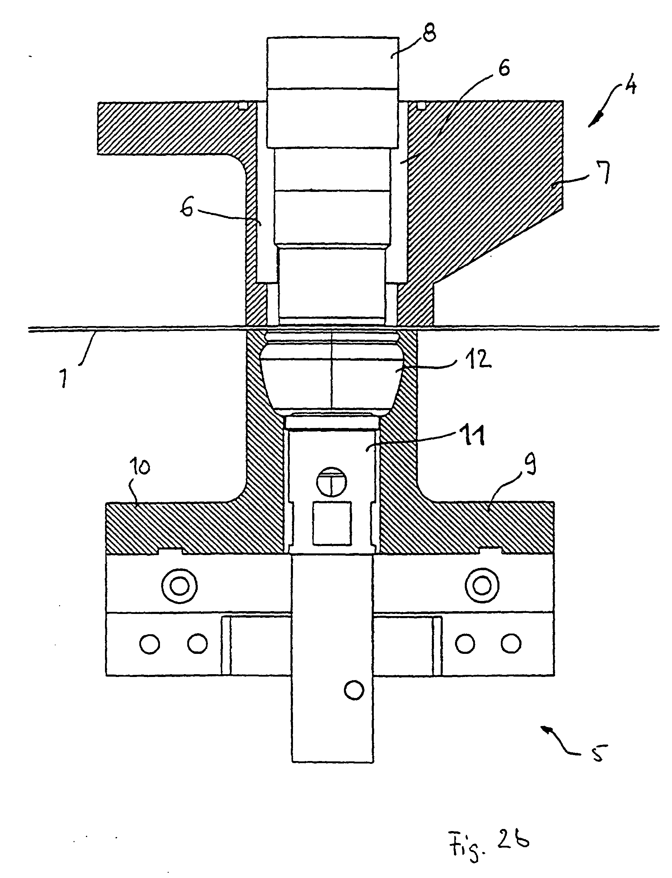

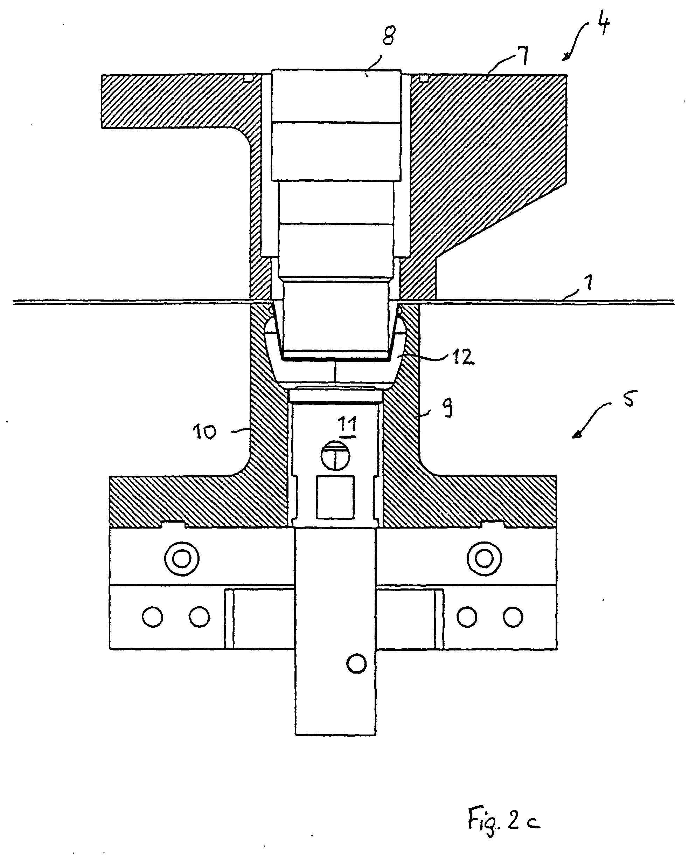

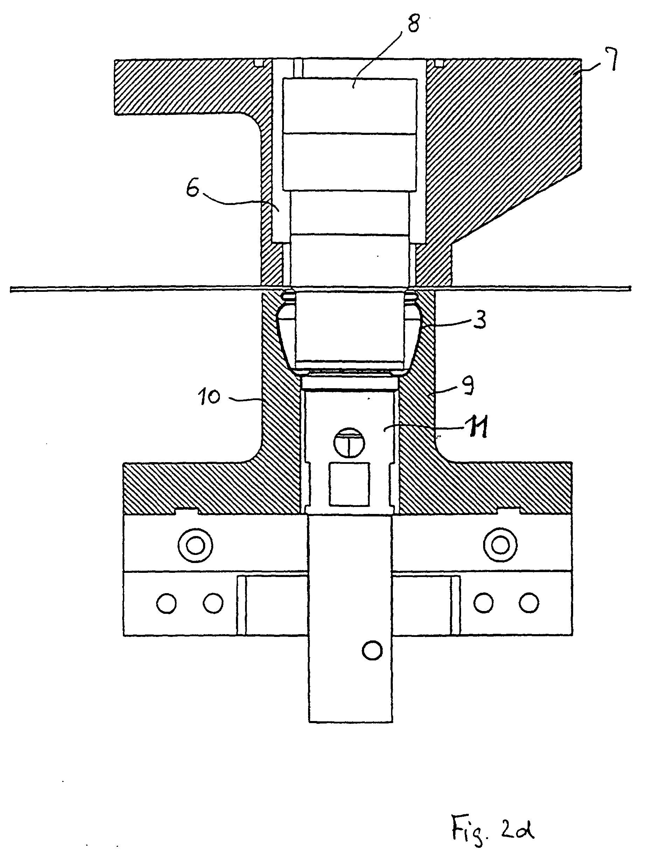

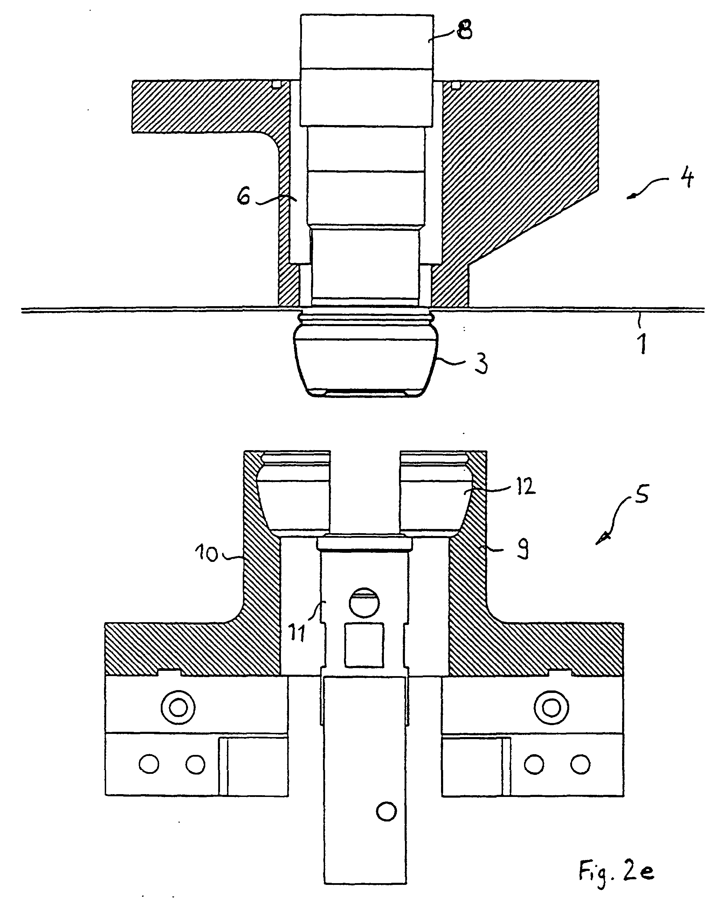

Fig. 2a zeigt in schematischer Darstellung auch für die Erläuterung des Verfahrens zur Herstellung eines Verpackungsbehälters 3 in vertikaler schematischer Schnittdarstellung ein Oberwerkzeug 4 und ein Unterwerkzeug 5, die wesentlicher Bestandteil der Formstation II zur Ausbildung des Verpackungsbehälters 3 durch einen kombinierten Tiefzieh-Blasformvorgang der Verpackungsfolie 1 bilden. In einer zugleich als Druckluftraum 6 dienenden Ausnehmung eines Aufnahmekörpers 7 des Oberwerkzeuges 4 ist vertikal beweglich ein vorzugsweise gestufter Stempel geführt, derart, daß der Druckluftraum 6 als Ringraum zwischen dem Stempel 8 und dem Aufnahmekörper zur Verfügung steht Der Aufnahmekörper 7 ist stationär angeordnet, die durch die Formstation II kontinuierlich geführte Verpackungsfolie ist mit 1 bezeichnet

Obwohl dies hier nicht im einzelnen dargestellt ist, wird die Verpackungsfolie 1, insbesondere thermoplastische Kunststoffolie, die auch mehrlagig ausgeführt sein kann und die beflammt, beschriftet, dekoriert, perforiert (und zwar jeweils in einer oder mehreren Schichten) ausgeführt sein kann und entsprechenden Vorbehandlungen zur Produktkennzeichnung unterzogen werden kann, in der Vorwärmstation I erhitzt, ehe sie in die Formstation II eingeführt wird.

Hierfür sind Infrarotverfahren ebenso vorteilhaft anwendbar wie induktives Erhitzen oder Erhitzen der Verpackungsfolie 1 durch einen erwärmten Gasstrom. Die Vorerwärmung der Verpackungsfolie 1 soll im allgemeinen möglichst homogen erfolgen.

Lediglich für bestimmte, spezielle Verpackungsbehältergeometrien (einfache Formen) kann es auch vorteilhaft sein, ein ausgeprägtes örtliches Wärmeprofil für die Erwärmung bestimmter Bereiche der Verpackungsfolie 1 vorzusehen und eine örtlich variable Erhitzung zu gestatten.

Hierzu werden Steuerungseinrichtungen für das gesamte, in der Vorwärmstation I befindliche Erhitzungswerkzeug oder einer Erhitzungsplatte für spezielle Formen bzw. zur Erhöhung der Fertigungsgeschwindigkeit eingesetzt. Über die Zuordnung entsprechender Sensoren ist es auch möglich, partielle Bereiche und Einzelflächen der Verpackungsfolie hinsichtlich ihrer Vorerwärmung speziell zu steuern.

Für schwierige Herstellungsaufgaben kann auch eine Kombination von Erhitzung und Kühlung der Verpackungsfolie 1 für eine örtlich variable Temperaturführung der Verpackungsfolie 1 sinnvoll sein. Wird eine mehrschichtige Verpackungsfolie verwendet, kann auch eine getrennte bzw. unterschiedliche Erwärmung von oben und unten, insbesondere z.B. durch infrarotstrahlung, erfolgen.

Das Unterwerkzeug 5, das in Fig. 2a in geöffnetem Zustand dargestellt ist (wie auch das Gesamtwerkzeug, bestehend aus Ober- und Unterwerkzeug 4, 5 in geöffnetem Zustand dargestellt ist), weist zwei lateral bewegbare Unterwerkzeug-Formhälten 9, 10 sowie einen Gegenstempel 11 auf, der bodenseitig einen im übrigen durch die beiden Unterwerkzeug-Formhälften 9, 10 begrenzten, vorzugsweise rotationssymmetrischen Formhohlraum 12 begrenzt. Der Gegenstempel 11 ist seinerseits über einen Lagerkörper 13 abgestützt und kann auch vertikal beweglich sein. Der Formhohlraum 12 weist im vorliegenden Ausführungsbeispiel Hinterschneidungen 14 auf, so daß es die spezielle Gestaltung des Unterwerkzeuges 5 ermöglicht, wesentlich formvariablere und standsicherere Verpackungsbehälter 3 herzustellen.

Obwohl dies hier nicht im einzelnen dargestellt ist, werden vorzugsweise die Unterwerkzeug-Formhälften 9,10 wie auch der Gegenstempel 11 individuell beheizt und/oder gekühlt. Dies gilt auch für den Stempel 8 bzw. den Aufnahmekörper 7 des Oberwerkzeuges. Das Gesamtwerkzeug besteht daher vorzugsweise aus gut wärmeleitfähigem Material, vorzugsweise aus einer Aluminiumlegierung.

In Abhängigkeit von der Geometrie des Formhohlraumes 12 können auch andere Werkstoffe für das Ober- und Unterwerkzeug und eine spezielle örtlich gesteuerte, gezielte Temperaturführung im Werkzeug ausgeführt werden, insbesondere unter Verwendung von Lokal-Sensoren, deren Signale in einer elektronischen Steuereinrichtung verarbeitet werden.

Obwohl dies hier nicht dargestellt ist, kann innerhalb der Formstation auch ein sofortiges Etikettieren durch zusätzliche Zuführung eines Etikettenbandes zu dem Formhohlraum oder durch Einlegen von Einzeletiketten in den Formhohlraum 12 (vorzugsweise mit Zuführaggregat oder einem Industrieroboter) erfolgen.

Um eine hohe Anpaßbarkeit an unterschiedliche Verpackungsfolien 1 zu gewährleisten, sind alle Elemente der Formstation, d.h. alle Teile des Ober- und Unterwerkzeuges 4, 5, insbesondere der Oberstempel 8 bzw. die formgebenden Elemente des Unterwerkzeuges 5 leicht und rasch auswechselbar.

Das Stempelmaterial des Stempels 8 bzw. des Gegenstempels 11 ist für den Ablauf des Verpackungsfolien-Formvorganges und für die Materialwanderung innerhalb des Formhohlraumes besonders wichtig, außerdem ist die Stempelgeometrie auf die Geometrie des Formhohlraumes abgestimmt und wird ein Geschwindigkeitsprofil für das durch den Oberstempel 8 erfolgende Tiefziehen der Verpackungsfolie 1 in den Formhohlraum 12 gewählt. Vorzugsweise wird der Stempel 8 (Tiefziehkolben) pneumatisch gesteuert. Die Steuerung der Stempelgeschwindigkeit erfolgt exakt in Abhängigkeit von der Geometrie des herzustellenden Verpackungsformkörpers. In Abhängigkeit von der erforderlichen Präzision der Geschwindigkeitssteuerung der Stempelbewegung kann der Stempel 8 (Tiefziehkolben) anstelle einer pneumatischen Steuerung auch Servomotoren gesteuert werden. Die Stempelgeschwindigkeit ist somit in starkem Maße vom Stempelweg, d.h. von der jeweiligen Eintauchtiefe des Stempels in den Formhohlraum unter gleichzeitigem Tiefziehen der Verpackungsfolie 1 abhängig (s. auch Fig. 2c, 2d).

Fig. 2b zeigt das geschlossene, aus Ober- und Unterwerkzeug 4, 5 bestehende Gesamtwerkzeug, wobei die Unterwerkzeug-Formhälfte 9, 10 in Verbindung mit dem bodenseitigen Gegenstempel 11 den Formhohlraum 12 begrenzen und der Aufnahmekörper 7 als Niederhalter für die erhitzte Verpackungsfolie 1 wirksam ist. Der Stempel 8 ist in Fig. 2b am Beginn des Tiefziehvorganges (aufsitzend auf der Verpackungsfolie 1) gezeigt.

Fig. 2c verdeutlicht einen ersten Abschnitt des Tiefziehvorganges der Verpackungsfolie 1 hinein in den Formhohlraum 12.

In Fig. 2d ist der Stempel 8 ist seiner unteren Endlage gezeigt, und der Verpackungsbehälter 3 ist durch Überlagerung der Endphase des Tiefziehvorgangs mit einem Blasformvorgang durch Einblasen von Druckluft aus dem Druckluftraum 6 entlang des Stempels 8 in den vorgeformten Verpackungsbehälter-Rohling gebildet, insbesondere wird die Seitenausformung des Verpackungsbehälters 3 hergestellt und der Verpackungsbehälter 3 endgültig ausgebildet, indem durch die eingeblasene Druckluft die Verpackungsfolie sich in radialer Richtung von dem Stempel 8 entfernt und an die Innenwandung des Formhohlraumes 12 komplett anlegt.

Gegebenenfalls kann in Abhängigkeit von der Form der Stempel 8 auch mit radial und/oder axial verstellbaren Elementen für eine Aufweitfunktion bzw. Spreizfunktion vorgesehen sein, um bereits die endgültige Form des Verpackungsbehälters 3 während des Tiefziehvorganges weitestmöglich anzunähern und den Formänderungsanteil, der durch den anschließenden oder während der Endphase des Tiefziehvorganges gleichzeitig mit diesem durchgeführten Blasformvorgang erhalten wird, verhältnismäßig gering zu halten. Durch das Anlegen der erhitzten Verpackungsfolie 1 an die Wandung des Formhohlraumes 12 des Unterwerkzeuges 5 infolge des Luftdruckes (Blasform) kühlt sich die Folie dort ab.

Nach endgültiger Ausformung des Verpackungsbehälters 3 im Unterwerkzeug 5 wird der Oberstempel 8 wieder zurückgezogen und das Unterwerkzeug 5 geöffnet, wie dies in Fig. 2e dargestellt ist.

Zugleich wird das Unterwerkzeug nach unten zurückgeführt, so daß der hergestellte Verpackungsformkörper 3 in integralem Materfalverbund mit der übrigen Verpackungsfolie 1 an dieser festhängt und auch mit dieser aus der Formstation 11 in eine anschließende Füllstation transportiert werden kann.

Der Verpackungsbehälter 3 kann aufgrund der speziellen Werkzeuggestaltung des Unterwerkzeuges und der lateralen Beweglichkeit der beiden Unterwerkzeug-Formhälften 9 und 10 auch Hinterschneidungen 14 aufweisen, ohne daß das Endformen irgendwelche Schwierigkeiten bereitet.

Obwohl dies in den Figuren nicht dargestellt ist, kann der Verpackungsbehälter sowohl in seinem Halsbereich als auch bodenseitig Halterungsvorsprünge oder andere Mittel, wie z.B. eine Rundgewindeprägung, für das Aufschrauben eines Verschlußdeckels aufweisen.

Stempelgeschwindigkeit, Werkzeugform und -temperatur sowie Luftzufuhr müssen ebenso aufeinander abgestimmt sein, wie das Material des Werkzeuges einschließlich des Stempels 8 in Bezug auf das Material der Verpackungsfolie 1.

Vorzugsweise erfolgt eine variable Steuerung der Stempelgeschwindigkeit des Stempels 8 (gegebenenfalls auch einer Vertikalbewegungsgeschwindigkeit des unteren Gegenstempels 11) über Servomotoren oder eine Pneumatik-Steuereinrichtung.

Die Steuerung der Stempeltemperatur des Stempels 8 kann örtlich variabel sein, wird jedoch vorzugsweise gleichmäßig gehalten. Gleiches gilt für die Gestaltung und Strukturierung der Oberfläche des Stempels 8, für die Steuerung der Werkzeugtemperatur des Unterwerkzeuges 5 (gleichmäßig oder örtlich variabel) und die Oberflächengestaltung für insbesondere den Formhohlraum 12 des Unterwerkzeuges 5. Auch die Lufttemperatur der für den Blasformvorgang eingeblasenen Druckluft kann einer speziellen Steuerung unterliegen.

Auch zur Förderung der Produktionsgeschwindigkeit ist es möglich, den Stempel 8 aus mehreren, teleskopartig ineinander arbeitenden Stempeln zusammenzusetzen.

Der Formhohlraum 12 im Unterwerkzeug kann z.B. auch Henkel-Geometrien beinhalten. Das Formverfahren läuft in diesem Werkzeug wie folgt ab:

Zunächst erfolgt der Folientransport der Verpackungsfolie 1 in vorerhitztem und/oder vorbehandeltem Zustand in den Bereich zwischen Ober- und Unterwerkzeug 4, 5. Anschließend wird die Verpackungsfolie 1 stillgesetzt. Sodann wird das Unterwerkzeug 5 und anschließend auch das Gesamtwerkzeug durch Vertikalbewegung des Unterwerkzeuges und Aufsetzen des Niederhalters (Aufnahmekörper 7) geschlossen. Nunmehr senkt sich der präzise temperierte (geheizte oder gekühlte) Stempel 8 mit kontrollierter, an den Tiefziehprozeß variabel angepaßter Geschwindigkeit ab zur Tiefzieh-Verformung der Verpackungsfolie 1 in den Formhohlraum 12 des Unterwerkzeuges 5. Die Verpackungsfolie 1 hat dabei nur geringen Kontakt im Halsbereich mit dem Unterwerkzeug 5, in diesem Bereich entspricht der radiale Spalt bzw. Abstand zwischen Stempel 8 und Formhohlraum 12 im wesentlichen der Wandstärke des späteren Verpackungsbehälters 3 (Foliendicke) zuzüglich einer gewissen Bewegungstoleranz. Nach Zurücklegen eines bestimmten Stempelweges des Stempels 8 wird der zusätzliche Blasformvorgang, insbesondere ausgelöst durch den Stempel 8, eingeleitet (Einblasen von Druckluft über den Druckluftraum 6 nach unten in den Raum zwischen Stempel 8 und vorgeformter Verpackungsfolie 1), worauf sich die erhitztee Verpackungsfolie 1 durch den Luftdruck an die Wandung des Formhohlraumes 12 anlegt und dort abkühlt.

Anschließend wird der Stempel 8 nach oben zurückgeführt und das Werkzeug geöffnet (einschließlich Öffnen des Unterwerkzeuges 5), der am Folienmaterialverbund hängende Verpackungsbehälter 3 (s. Fig. 2e) wird sodann aus dem Bereich der Formstation 11 weiter zur (hier nicht gezeigten) Füllstation transportiert.

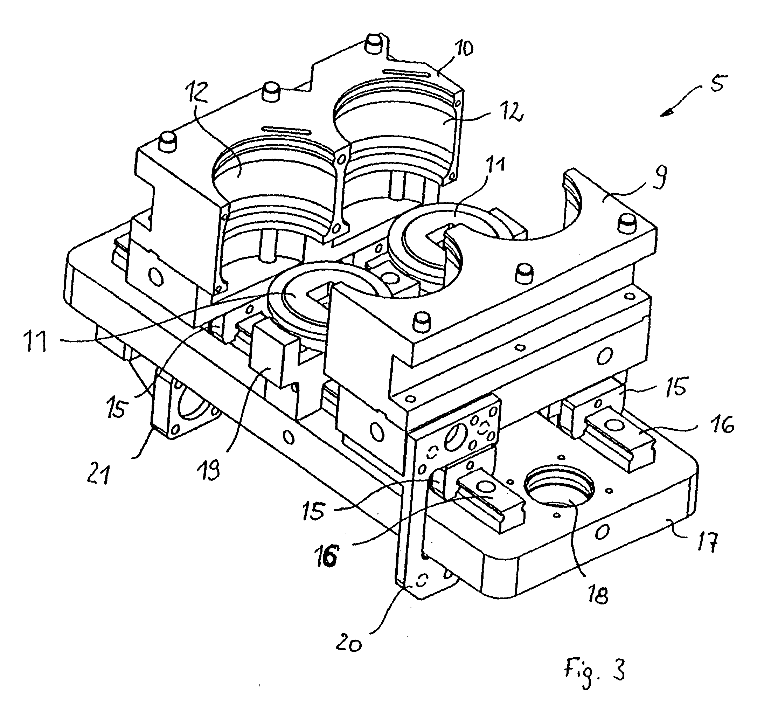

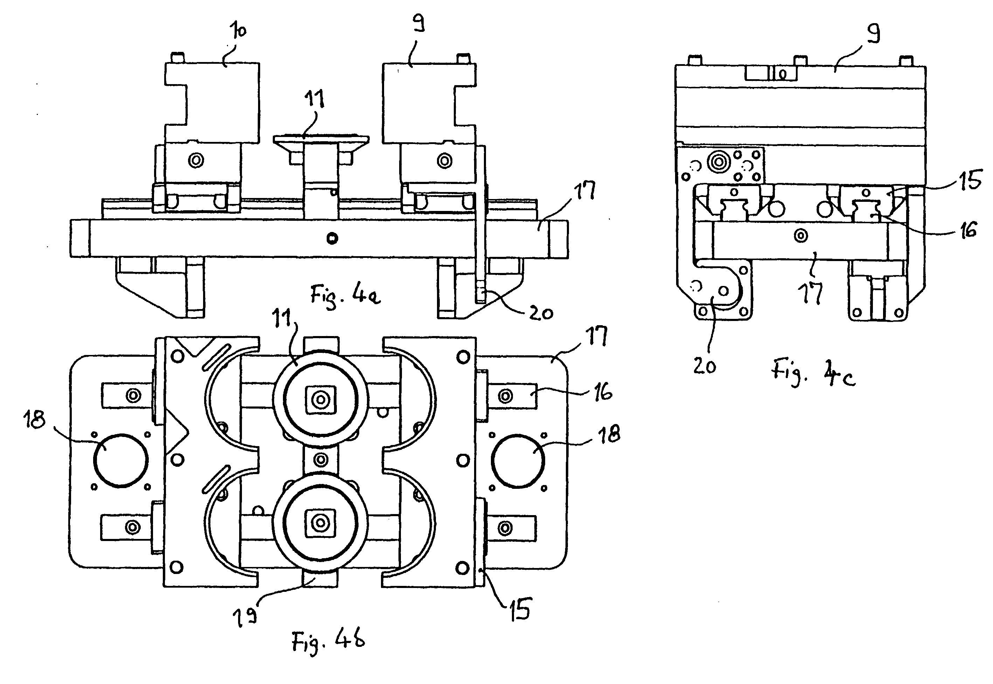

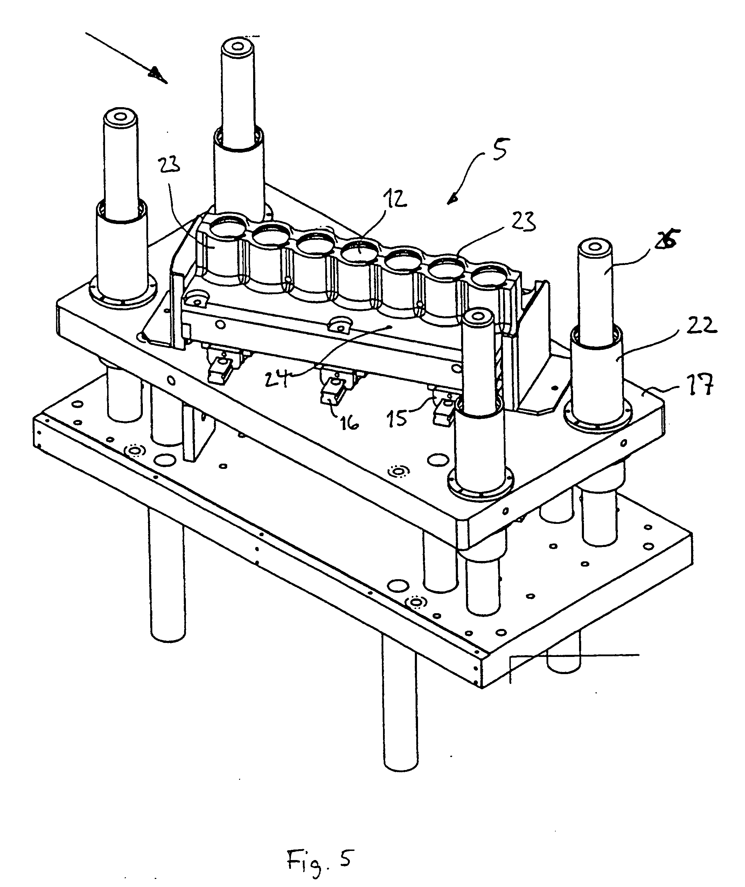

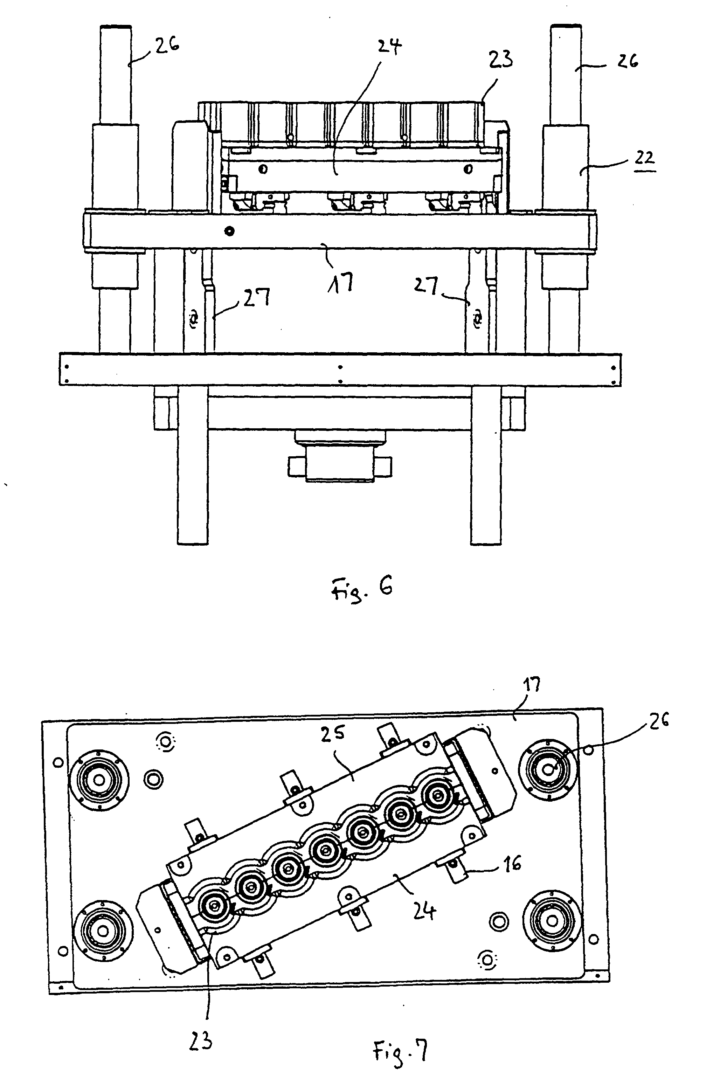

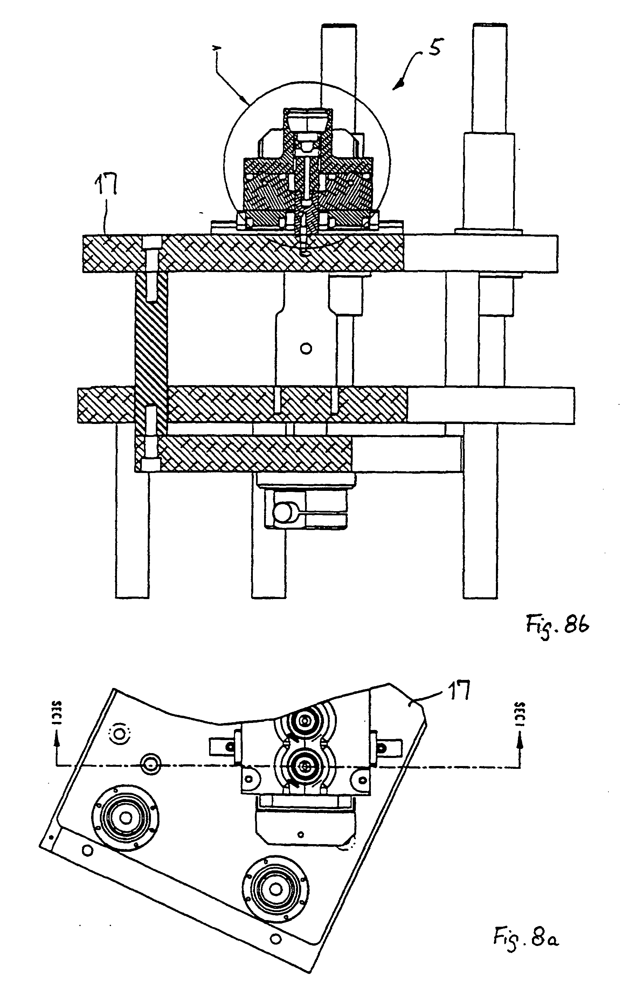

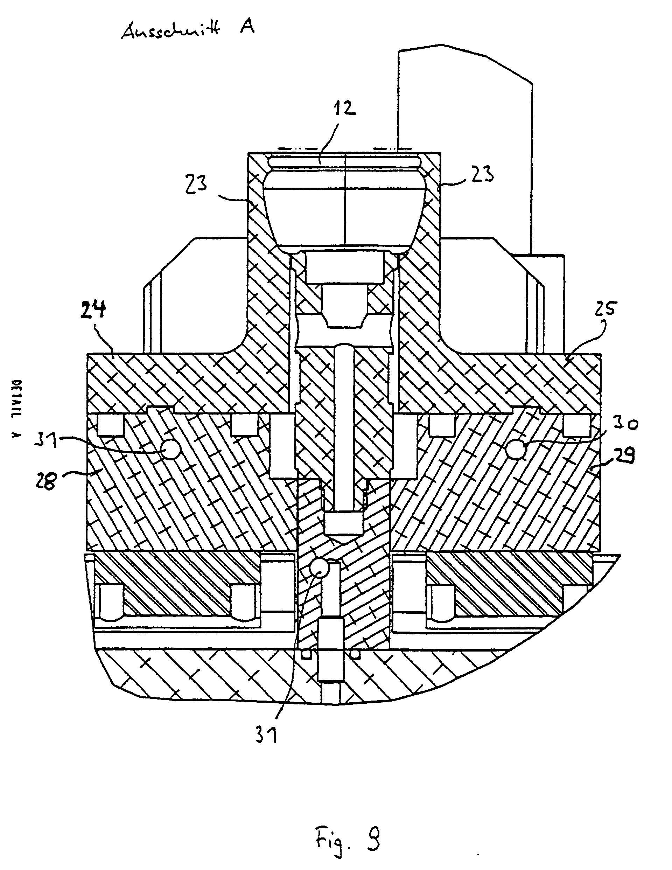

In Fig. 3 ist ein Ausführungsbeispiel des Unterwerkzeuges 5 mit zwei nebeneinanderliegenden Formhohlräumen 12 in geöffnetem Zustand dargestellt. Die Formhälften 9, 10 des Unterwerkzeuges 5 sind über Schlitten 15 auf Führungsschienen 16 gleitverschieblich gelagert. Die Führungsschienen 16 sind auf einer Lagerungsplatte 17 angeordnet, die ihrerseits über Aufnahmebohrungen 18 an einem (hier nicht dargestellten) Säulenführungsgestell vertikal beweglich gelagert ist.

Die den Boden des Formhohlraumes 12 begrenzenden Gegenstempel 11 sind über eine Supporteinrichtung 19 ebenfalls an den Führungsschienen 16 gelagert.

Eine solche Werkzeugkonfiguration gestattet in günstiger Weise sowohl die Auswechselbarkeit der einzelnen Teile des Unterwerkzeuges 5 zur Schaffung von Formhohlräumen 12 unterschiedlicher Konfiguration und läßt auch mühelos komplizierte und hinterschnittene Geometrien für die Verpackungsbehälter frei zu. Die Unterwerkzeug-Formhälften 9 wie auch die Gegenstempel 11 können Füllkanäle zum Durchströmen mit Kühlflüssigkeiten aufweisen oder auch Heizeinrichtungen, auch zur lokal differenzierten Erwärmung der Form aufnehmen.

Die laterale Schließ- und Öffnungssteuerung der gegenläufig bewegbaren Unterwerkzeug-Formhälften 9, 10 kann in Verbindung mit einem schlittenfesten Anschlag 20 und einer in Verbindung mit einer Führung 21 vorgesehenen, hier nicht dargestellten Steuervorrichtung, erfolgen.

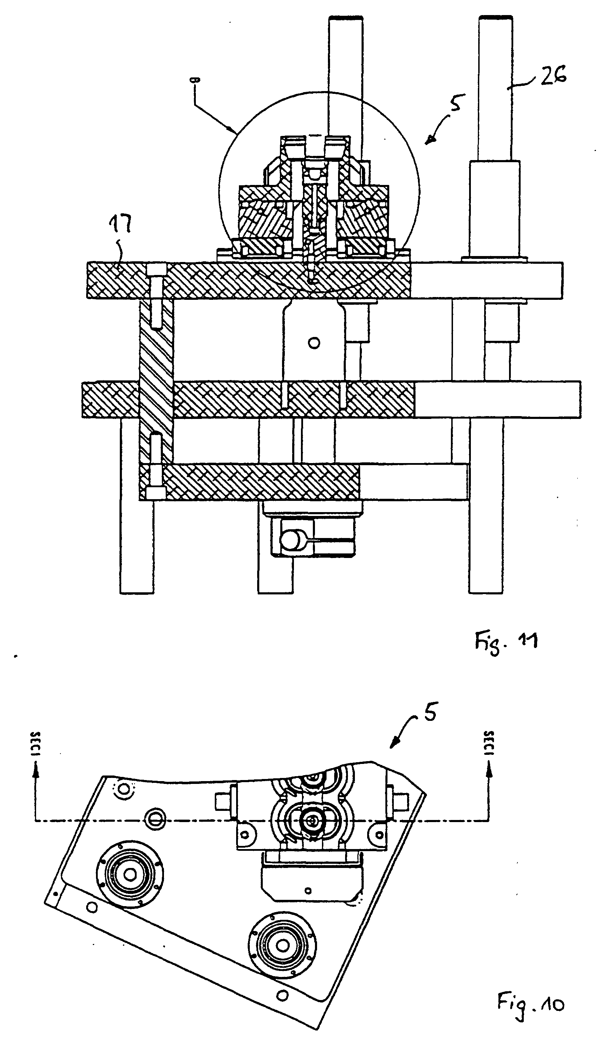

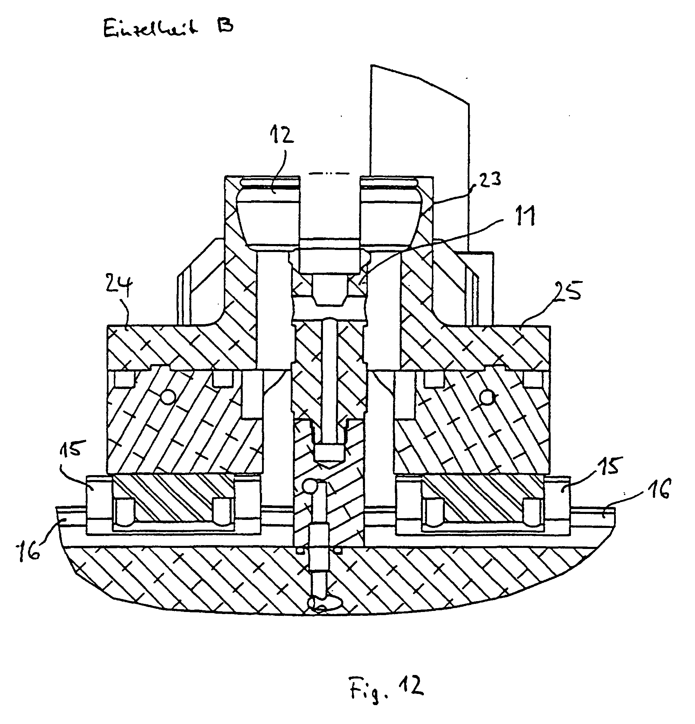

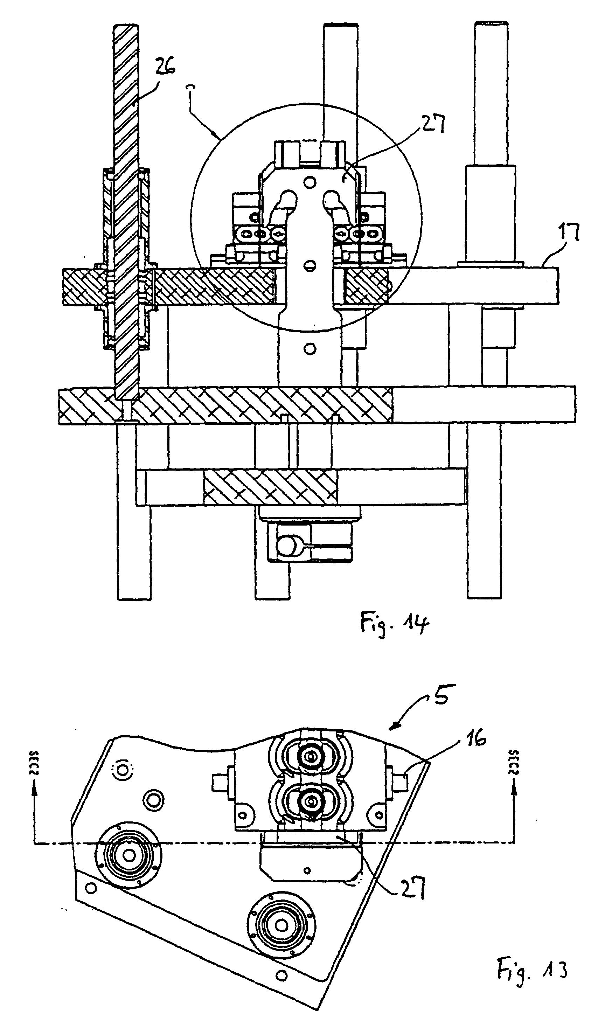

Die Fig. 4a bis 4c zeigen eine Vorderansicht (Fig. 4a), eine Draufsicht (Fig. 4b) und eine Seitenansicht des Unterwerkzeuges nach Fig. 3 in schematischer Darstellung, so daß diesbezüglich auf die Erläuterungen zu Fig. 3 verwiesen wird.

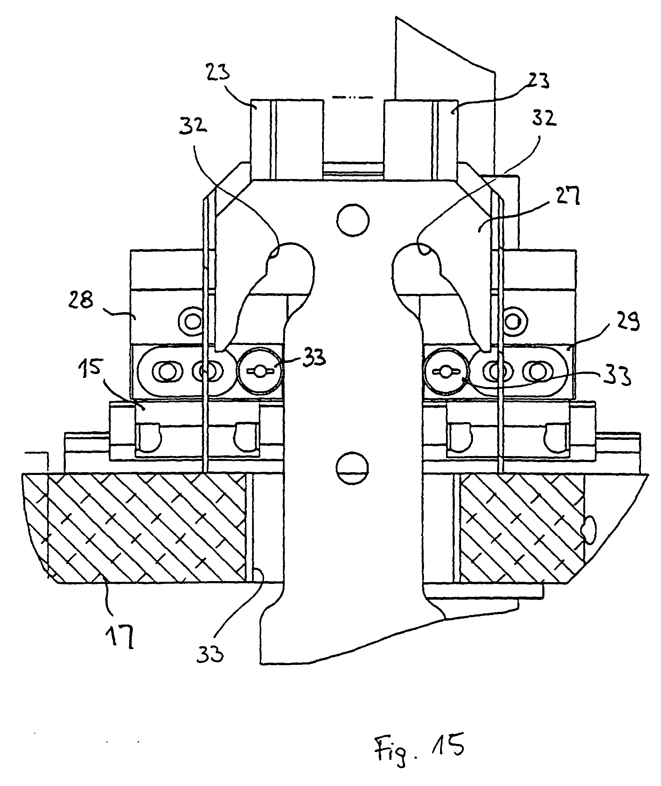

Fig. 5 zeigt eine andere Ausführungsform eines Unterwerkzeuges 5 für die Formstation II in Verbindung mit einem Säulenführungsgestell 22 zur Vertikalführung des Unterund/oder Oberwerkzeuges 5, 4.

Bei diesem Ausführungsbeispiel ist in "Reihenanordnung" einer Mehrzahl von Formhohlräumen 12 in Verbindung mit begrenzenden Zylinderabschnitten 23, die jeweils mit gegenüberliegenden Führungsplatten 24, 25 verbunden, vorzugsweise integral, sind, eine Lateralführungsvorrichtung für das Öffnen des Unterwerkzeuges 5 geschaffen, die über seitliche Steuerschablonen 27 entlang der auf der Lagerungsplatte 17 befestigten Führungsschienen 16 erfolgt, auf denen die Führungsplatten 24, 25 über Schlitten 15 abgestützt sind. Auf diese Weise wird über eine Vertikalbewegung der Lagerungsplatte 17 entlang der Führungssäulen 26 durch Formeingriffsmittel der Steuerschablonen 27 eine Lateralbewegung der beiden Unterwerkzeug-Formhälften 9, 10 (gebildet durch die Zylinderabschnitte 23 und die Führungsplatten 24, 25) erreicht. Hinsichtlich möglicher Kühlung oder Erwärmung des Unterwerkzeuges zur Erzielung eines optimalen Fertigungsergebnisses wird auf die Erläuterungen zu dem Ausführungsbeispiel nach Fig. 3 verwiesen, das insoweit auch für die vorliegende Ausführungsform gilt

Besonders bemerkenswert bei dieser Anordnung ist die geneigte (schräggestellte) Anordnung des Unterwerkzeuges 5 im Säulenführungsgestell 22, die zu einer besonders kompakten und platzsparenden Anordnung und Ausbildung der Formstation II sowie zu einer effizienten Ausnutzung der Verpackungsfolie 1 führt, die in Fig. 5 in Pfeilrichtung, d.h. parallel zu den Längskanten der Führungsplatte 17 relativ zu dem Unterwerkzeug 5 bewegt wird.
Vorzugsweise beträgt der Neigungswinkel der Reihenanordnung zur Laufrichtung der Verpackungsfolie 45°. Gegebenenfalls können auch mehrere Reihen solcher Formen in Anordnung "auf Lücke" parallel vorgesehen sein.

Eine Vorderansicht des Säulenführungsgestells 22 mit dem Unterwerkzeug 5 und eine Draufsicht dieses Werkzeugaufbaus sind in den Fig. 6 und 7 dargestellt.

Fig. 8a zeigt eine Teildarstellung nach Fig. 7 für das geschlossene Unterwerkzeug, wobei eine Schnittdarstellung nach Fig. 8a in 8b dargestellt ist, mit einer Einzelheit A, die vergrößert in Fig. 9 gezeigt ist.

Die Einzelheit nach Fig. 9 zeigt das Unterwerkzeug in geschlossenem Zustand. Die Zylinderabschnitte 23 bilden integral mit den Führungsplatten 24, 25 und dem Gegenstempel 11 den jeweiligen Formhohlraum 12. Gemeinsam mit Stützkörpern 28, 29 wird eine Lateral-Bewegung zum Öffnen und Schließen des Formhohlraumes 12 bewirkt. Kanäle 30, 31 können sowohl der Führung eines Kühlmittels in den Stützkörpem als auch im Bereich des Gegenstempels dienen.

Die Fig. 10, 11 und 12 zeigen den Darstellungen gemäß Fig. 8a, 8b und 9 entsprechende Darstellungen, jeweils für das geöffnete Unterwerkzeug.

Die Fig. 13 und 14 verdeutlichen Schnittdarstellungen (Seitenansichten) des Säulenführungsgestelles und des Unterwerkzeuges 5 bei geöffnetem Werkzeug, wobei zugleich die Steuerschablone 27 genauer gezeigt ist. Diese ist als aufragendes Formteil ausgebildet, das durch die Lagerungsplatte 17 hindurchgreift und stimseitig den Werkzeugblock des Unterwerkzeuges 5 begrenzt. Die Steuerschablone 27 weist ein Paar geneigter Steuerkurven 32 auf, die mit entsprechenden Gegenformelementen (Rollen 33, die an den Stützkörpern 28, 29 ausgebildet sind, bei vertikaler Relativbewegung zwischen Steuerschablone 27 und Stützkörper 28 bzw. 29 in Eingriff gelangen und eine laterale Zwangssteuerung zum Öffnen und Schließen der Unterwerkzeug-Formhälften 8, 9 (bzw. der entsprechenden Führungsplatten 24, 25 mit den Zylinderabschnitten 23) bewirken.

Auf diese Weise ist eine sehr vorteilhafte und funktionssichere Steuerung für die Öffnungs- und Schließbewegung des Unterwerkzeuges 5 realisert (s. auch die vergrößerte Darstellung nach Fig. 14.)

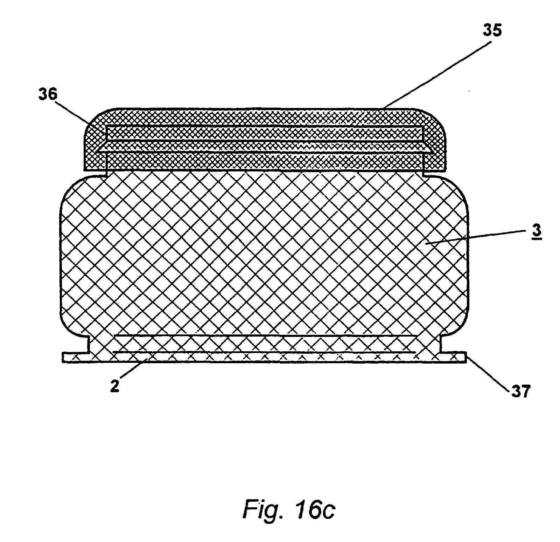

In den Fig. 16a, 16b, 16c sind Ausführungsbeispiele von Verpackungsbehältem 3 dargestellt, die aus thermoplastischem Kunststoffmaterial und nach dem vorerörterten Verfahren bzw. mit den erläuterten Vorrichtungen hergestellt sind.

Durch das erfindungsgemäße Verfahren ist es möglich, zusätzlich zum Verschluß des Verpackungsbehälters 3 mit der (Heiß-Siegelfolie 2 auch noch einen SchraubdeckelVerschtuß vorzusehen, und zwar an der der Siegelfolie 2 gegenüberliegenden Seite des Verpackungsbehälters 3. Mit anderen Worten ist es durch die erfindungsgemäße Vorrichtung möglich, in besonders vorteilhafter Weise wieder verschließbare Kunststoff-Verpackungsbehälter 3 herzustellen, was insbesondere für die Aufbewahrung von Restmengen (Lebensmitteln) in den Verpackungsbehältem von großem Vorteil ist und die Verwendungsdauer der Verpackungsbehälter 3 drastisch erhöhen kann, so daß sich eine deutlich geringere Umweltbelastung ergibt

Die Fig. 16a bis 16b zeigen Ausführungsformen für Verpackungsbehälter 3 mit aufschraubbarem Deckel 35, der ebenfalls aus Kunststoffmaterial besteht. Das besondere dieser Ausführungen liegt darin, daß der Deckel auf die (bezogen auf das Herstellungsverfahren) ehemalige "Bodenseite" des Verpackungsbehälters 3 aufgeschraubt ist, der in diesem Bereich mit einem Schraubgewinde 36 versehen ist. Das heißt, daß die "Heißsiegelseite" im gebrauchsfertigen Zustand den Boden des befüllten Verpackungsbehälters 3 bildet, während im (bezogen auf die Formgebung) ehemaligen Bodenbereich umfangsseitig das Schraubgewinde 36 vorgesehen ist und der Behälterboden eine öffnungsvorrichtung aufweist, d.h. so vorgeprägt, vorgestanzt oder in seiner Materialstärke anderweitig geschwächt ist, daß ein einfaches Öffnen dieser Seite des Verpackungsbehälters möglich ist, so daß diese Seite die für den Verbraucher zu benutzende Öffnungs- und Entnahmeseite des Verpackungsbehälters bildet, während die Siegelfolie 2 den Boden des Verpackungsbehälters 3 bildet, der im praktischen Gebrauch verschlossen bleibt.

Fig. 16b zeigt einen derartigen Verpackungsbehälter 3 ohne Deckel.

## Patentansprüche

1. Verfahren zum Herstellen befüllter und verschlossener, mit zumindest einer Hinterschneidung versehener Verpackungsbehälter aus Kunststoff, wobei eine zumindest teilweise aus Kunststoffmaterial bestehende Folie vorgewärmt und in einer Formstation durch Tiefziehen und Blasformen zu Verpackungsbehältern (3) geformt wird, diese zusammenhängend aus der Formstation in eine Befüllstation befördert und mit einem Verpackungsgut befüllt werden, anschließend die Verpackungsbehälter (3) mit einer Siegelfolie (2) versiegelt und anschließend die befüllten und verschlossenen Verpackungsbehälter (3) durch Ausstanzen im Bereich eines Siegelrandes (37) vereinzelt und abgefördert und die Verpackungsbehälter (3) mit einem Schraubdeckel (35) auf der der Siegelfolie (2) gegenüberliegenden Seite versehen werden.

2. Kunststoff-Verpackungsbehälter, insbesondere hergestellt durch das Verfahren nach Anspruch 1, mit zumindest einer Hinterschneidung (14) und einem auf einer Seite des Verpackungsbehälters (3) angeordneten, radial vorspringenden Umfangs-Randabschnitt (37). der zum Verschließen des Verpackungsbehälters (3) mit einer Siegelfolie (2) verbindbar ist, wobei ein Schraubgewinde (36) in einem Halsbereich des Verpackungsbehälters (3) ausgebildet ist, **dadurch gekennzeichnet, daß** das Schraubgewinde (36) auf der dem Umfangs-Randabschnitt (37) gegenüberliegenden Seite des Verpackungsbehätters (3) angeordnet ist.

3. Kunststoff Verpackungsbehälter nach Anspruch 2, **dadurch gekennzeichnet, dass** benachbart zu dem Schraubgewinde (36) der Verpackungsbehälter (3) zumindest partiell eine geringere Materialstärke aufweist und/oder Aufreiß- oder Öffnungsvorrichtungen zum Öffnen eines bodenseitigen Bereichs des Verpackungsbehälters (3) aufweist.

4. Vorrichtung zur Herstellung von Verpackungsbehältem aus Kunststoff nach Anspruch 2 oder 3, mit einem Oberwerkzeug (4), das einen axial beweglichen, zum Eintauchen in einen Formhohlraum (12) eines Unterwerkzeuges (5) unter Tiefziehen einer Kunststofffolie (1) in diesen vorgesehenen Stempel (8) aufweist und mit einer Druckgas-Zufuhreinrichtung zum Anlegen der Kunststofffolie (1) an eine Innenkontur des Formhohlraumes (12), wobei der Formhohlraum (12) zumindest eine Hinterschneidung (14) aufweist, das Ober- und Unterwerkzeug (4, 5) ein Mehrfachform-Werkzeug mit einer Mehrzahl von Formhohlräumen (12) und Stempeln (8) ist, die Mehrfachform-Formhohlräume (12) in einer Reihenanordnung vorgesehen sind, das Unterwerkzeug (5) unter Bildung von Unterwerkzeug-Formhälften (9,10) geteilt ist und diese im wesentlichen senkrecht zu einer Bewegungsrichtung des Stempels (8) zum Öffnen und Schließen des Unterwerkzeugs (5) entlang von Führungsschienen (16) gleitverschieblich bewegbar sind, **dadurch gekennzeichnet, dass** die Reihenanordnung zu einer Transportrichtung der Kunststofffolie (1) schräggestellt ist und zumindest eine Steuerschablone (27) mit Steuerkurven (32) für eine laterale Zwangssteuerung der Öffnungs- und Schließbewegung der Unterwerkzeug-Formhälften (8,9) vorgesehen ist.

5. Vorrichtung nach Anspruch 4, **dadurch gekennzeichnet, dass** das Ober- und Unterwerkzeug (4, 5) in einem Säulen-Führungsgestell (22) angeordnet ist, und der Formhohlraum (12) bodenseitig durch einen im Unterwerkzeug (5) vorgesehenen Bodenstempel (11) begrenzt ist.

6. Vorrichtung nach Anspruch 4 oder 5, **dadurch gekennzeichnet, dass** die Reihenanordnung unter einem hinsichtlich Ausnutzung der Kunststofffolie (1) optimierten Neigungswinkel vorgesehen ist, vorzugsweise dieser Neigungswinkel 45° zur Laufrichtung der Kunststofffolie beträgt.

7. Vorrichtung nach zumindest einem der vorhergehenden Ansprüche 4 bis 6, **dadurch gekennzeichnet, dass** die Steuerkurven (32) der stimseitig in Bezug auf das Unterwerkzeug (5) vorgesehenen Steuerschablone (27) bezüglich einer vertikalen Achse geneigt sind, wobei die Steuerschablone (27) in Verbindung mit einer vertikalen Relativbewegung zwischen Unterwerkzeug (5) und Steuerschablone (27) in Eingriff mit Formelementen (33) des Unterwerkzeuges (5) bringbar ist, zur lateralen Bewegungssteuerung der Öffnungs- und Schließbewegung der Unterwerkzeug-Formhälften (9, 10) des Unterwerkzeuges (5).

8. Vorrichtung nach Anspruch 7, **dadurch gekennzeichnet, dass** die Steuerschablone (27) an einer im wesentlichen parallel zur Tragplatte (17) des Unterwerkzeuges (5) angeordneten Stützplatte befestigt ist, und durch eine Ausnehmung (33a) in der das Unterwerkzeug (5) ragenden Tragplatte (17) hindurchragt, zum Eingriff mit den Formelementen (33) des Unterwerkzeuges (5).

9. Vorrichtung nach zumindest einem der vorhergehenden Ansprüche 4 bis 8, **dadurch gekennzeichnet, dass** der Bodenstempel (11) vertikal beweglich ist.

10. Vorrichtung nach zumindest einem der vorhergehenden Ansprüche 4 bis 9, **dadurch gekennzeichnet, dass** die Unterwerkzeug-Formhälften (9, 10) und/oder der Gegenstempel (11) zumindest teilweise individuell beheizt und/oder gekühlt sind.

11. Verpackungsmaschine mit einer Vorrichtung nach einem der Ansprüche 4 bis 10, in der aus einer Kunststofffolie in einem kombinierten Tiefzieh-/Blasformvorgang ein zumindest eine Hinterschneidung aufweisender Verpackungsbehälter (3) herstellbar ist, mit einer Füllstation (III) zum Befüllen des Verpackungsbehälters (3) mit einem zu verpackenden Gut, einer Siegelstation (IV) zum Versiegeln einer Einfüllöffnung des Verpackungsbehälters (3), einer Trennstation (V) zum Individualisieren der Verpackungsbehälter (3), und einer Abgabestation (VI) für die befüllten und versiegelten Verpackungsbehälter (3).

12. Verpackungsmaschine nach Anspruch 11, **dadurch gekennzeichnet, dass** stromauf der Verpackungsbehälter-Formstation (II) eine Vorwärmstation (I) für die Kunststofffolie (1) vorgesehen ist.

13. Verpackungsmaschine nach Anspruch 11 oder 12, **dadurch gekennzeichnet, dass** in Verbindung mit der Siegelstation (IV) eine Siegel-Folie (2) von oben auf die fortlaufend geformten und befüllten Verpackungsbehälter (3) aufsiegelbar ist.

## Claims

1. Method for manufacturing filled and closed packaging containers having at least one undercut and being made of synthetic resin, wherein a film being at least partially made of synthetic resin is preheated and, in a molding station, shaped into packaging containers (3) through deep-drawing and low-molding, said packaging containers (3) being connected to each other and delivered from the molding station into a filling station in which they are filled with a given product, subsequently said filled and closed packaging containers (3) are individualized by means of punching in the area of a seal rim (13) and discharged and that the packaging containers (3) are provided with a screwed cover (35) on the side opposite to the sealing film (2).

2. Synthetic resin-packaging container, in particular manufactured according to the method of claim 1, comprising at least an undercut (14) and a radially projecting circumferential edge portion (37) disposed on one side of the packaging container (3), which, for closing the packaging container (3), is connectable to a seal film (2) wherein a screw thread (36) is provided at a neck portion of the packaging container (3), **characterized in that** the screw thread (36) is provided at a side opposite to the circumferential edge portion (37) of the packaging container (3).

3. Synthetic resin-packaging container according to claim 2, **characterized in that** adjacent to the screw thread (36) the packaging container (3), at least partially, comprises a reduced material thickness and/or thread tap-or opening means for opening a bottom side area of the packaging container (3).

4. Apparatus for manufacturing of packaging containers from synthetic resin according to claim 2 or 3, comprising an upper tool (4) having an axially movable plug (8), adapted to dive into a cavity (12) of a lower tool (5) under deep drawing of a synthetic resin film (1) and a pressure gas supply means for adhering the synthetic resin film (1) to the inner surface of the cavity (12) wherein said cavity (12) comprises at least one undercut portion (14), said upper and lower tool (4,5) is a multiple cavity tool having a plurality of cavities (12) and plugs (8), said multiple cavities (12) being provided in a row, said lower tool (5) being divided thus forming lower tool mold halves (9,10) which are slidably movable substantially vertically to a moving direction of the plug (8) for opening and closing the lower tool (5) along the guide rails (16), **characterized in that** said disposal in a row is inclined with respect to the direction of transportation of the synthetic resin film (1) and at least one control cam means (27) comprising control cams (32) is provided for a lateral forced control of the opening and closing movement of the lower tool mold halves (8,9).

5. Apparatus according to claim **4, characterized in that** the upper and lower tool (4,5) are disposed in a column guide frame (22) and that the cavity (12) on its bottom side is defined by a bottom plug (11) provided in the lower tool (5).

6. Apparatus according to claim 4 or 5, **characterized in that** the disposal in a row is provided under an angle of inclination which is optimal with respect to the use of the synthetic resin film (1) preferably said angle of inclination amounts to 45° with respect to the running direction of the synthetic resin film.

7. Apparatus according to at least one of the preceding claims 1 to 6, **characterized in that** the operating cams (32) of the control cam means, being provided at a front side with respect to the lower tool (5) are inclined with respect to a vertical axis, wherein said control cam means (27) can be brought into engagement with cam followers the lower tool (5) in connection with a vertical relative movement between the lower tool (5) and the control cam means (27) for a lateral movement control of the opening and closing movement of the lower tool mold halves (9,10) of the lower tool (5).

8. Apparatus according to claim 7, **characterized in that** the control cam means (27) is affixed to a support plate which, in turn, is disposed substantially in parallel to a base plate (17) of the lower tool (5), said control cam means (27) projecting through a recess (33a) of the base plate (17) supporting the lower tool (5) for engagement with the cam followers (33) of the lower tool (5).

9. Apparatus according to at least one of the preceding claims 4 to 8, **characterized in that** the bottom plug (11) is vertically movable.

10. Apparatus according to at least one of the preceding claims 4 to 9, **characterized in that** the mold halves (9,10) of the lower tool and/or the bottom plugs (11), at least partially, are individually heated and/or cooled.

11. Packaging machine comprising an apparatus according to one of the claims 4 to 10, in which from a synthetic resin film in a combined deep drawing/blow molding process a packaging container (3) is manufacturable comprising at least one undercut, having a filling station (III) for filling the packaging container (3) with a product to be packaged, a sealing station (IV) for sealing a film in opening of the packaging container (3), a separating station (V) for individualizing the packaging containers (3) and a discharging station (VI) for the filled and sealed packaging containers (3).

12. Packaging machine according to claim 11, **characterized in that** downstream of the packaging container molding station (II) a preheating station (I) for the synthetic resin film (1) is provided.

13. Packaging machine according to claim 11 or 12, **characterized in that** in connection with the sealing station (IV) a sealing film (2) is sealable onto the continuously molded and filled packaging containers (3) from above.

## Revendications

1. Procédé pour fabriquer des récipients d'emballage en matière plastique remplis et fermés pourvus d'au moins une contre-dépouille, selon lequel un film composé au moins partiellement de matière plastique est préchauffé et mis en forme par emboutissage et soufflage sur matrice, dans une station de formage, pour former des récipients d'emballage (3), ces récipients (3) sont amenés d'un seul tenant de la station de formage à une station de remplissage et sont remplis avec un produit à emballer, puis ils sont scellés avec un film de scellage (2), les récipients (3) remplis et fermés sont ensuite séparés par découpage dans la zone d'un bord de scellage (37) et évacués, et les récipients (3) sont pourvus d'un couvercle à vis (35) sur le côté opposé au film de scellage (2).

2. Récipient d'emballage en matière plastique, fabriqué en particulier grâce au procédé selon la revendication 1, avec au moins une contre-dépouille (14) et une section de bordure périphérique (37) qui est disposée sur un côté du récipient d'emballage (3), qui fait saillie radialement et qui est apte à être reliée à un film de scellage (2) en vue de la fermeture dudit récipient (3), un filetage (36) étant formé dans une zone de goulot du récipient (3), **caractérisé en ce que** le filetage (36) est disposé sur le côté du récipient (3) opposé à la section de bordure (37).

3. Récipient d'emballage en matière plastique selon la revendication 2, **caractérisé en ce que** près du filetage (36), le récipient d'emballage (3) présente au moins partiellement une épaisseur de matière plus faible et/ou comporte des dispositifs de déchirage ou d'ouverture pour ouvrir une zone du récipient (3) située côté fond.

4. Dispositif pour fabriquer des récipients d'emballage en matière plastique selon la revendication 2 ou 3, comprenant un moule supérieur (4) qui comporte un poinçon (8) mobile axialement et destiné à être plongé dans une cavité (12) d'un moule inférieur (5) moyennant l'emboutissage d'un film en matière plastique (1), et un dispositif d'amenée de gaz sous pression pour appliquer le film (1) contre un contour intérieur de la cavité de moule (12), étant précisé que la cavité de moule (12) présente au moins une contre-dépouille (14), que les moules supérieur et inférieur (4, 5) constituent un moule à cavités multiples avec plusieurs cavités (12) et poinçons (8), que lesdites cavités (12) sont alignées, que le moule inférieur (5) est divisé et forme des cavités de moule inférieur (9, 10) et que celles-ci sont aptes à coulisser sensiblement perpendiculairement au sens de déplacement du poinçon (8), le long de rails de guidage (16) en vue de l'ouverture et de la fermeture du moule inférieur (5), **caractérisé en ce que** l'alignement est en biais par rapport au sens de transport du film en matière plastique (1) et il est prévu au moins un gabarit de guidage (27) avec des courbes de guidage (32) pour un guidage forcé latéral du mouvement d'ouverture et de fermeture des cavités de moule inférieur (8, 9).

5. Dispositif selon la revendication 4, **caractérisé en ce que** les moules supérieur et inférieur (4, 5) sont disposés dans un bloc à colonnes (22), et la cavité de moule (12) est délimitée, côté fond, par un poinçon de fond (11) prévu dans le moule inférieur (5).

6. Dispositif selon la revendication 4 ou 5, **caractérisé en ce que** l'alignement est prévu avec un angle d'inclinaison optimisé pour l'utilisation du film en matière plastique (1), et cet angle d'inclinaison est de préférence de 45° par rapport au sens de défilement du film en matière plastique.

7. Dispositif selon l'une au moins des revendications 4 à 6 précédentes, **caractérisé en ce que** les courbes de guidage (32) du gabarit de guidage (27) prévu côté frontal par rapport au moule inférieur (5) sont inclinées par rapport à un axe vertical, étant précisé que le gabarit de guidage (27), en liaison avec un mouvement relatif vertical entre le moule inférieur (5) et ledit gabarit (27), est apte à être accouplé à des éléments (33) du moule inférieur (5) en vue de guider latéralement le mouvement d'ouverture et de fermeture des cavités (9, 10) du moule inférieur (5).

8. Dispositif selon la revendication 7, **caractérisé en ce que** le gabarit de guidage (27) est fixé à une plaque d'appui sensiblement parallèle à la plaque de support (17) du moule inférieur (5) et pénètre, par un creux (33a), dans la plaque de support (17) qui porte le moule inférieur (5), pour s'accoupler aux éléments (33) du moule inférieur (5).

9. Dispositif selon l'une au moins des revendications précédentes 4 à 8, **caractérisé en ce que** le poinçon de fond (11) est mobile verticalement.

10. Dispositif selon l'une au moins des revendications précédentes 4 à 9, **caractérisé en ce que** les cavités de moule inférieur (9, 10) et/ou le poinçon opposé (11) sont chauffés et/ou refroidis au moins partiellement individuellement.

11. Machine d'emballage pourvue d'un dispositif selon l'une des revendications 4 à 10, dans laquelle un récipient d'emballage (3) présentant au moins une contre-dépouille peut être fabriqué à partir d'un film en matière plastique, lors d'une opération combinée d'emboutissage/soufflage, et qui comprend une station de remplissage (III) pour le remplissage du récipient d'emballage (3) avec un produit à emballer, une station de scellage (IV) pour le scellage d'une ouverture de remplissage dudit récipient (3), une station de séparation (V) pour l'individualisation des récipients (3), et une station de sortie (VI) pour les récipients (3) remplis et scellés.

12. Machine d'emballage selon la revendication 11, **caractérisée en ce qu'**une station de préchauffage (I) pour le film en matière plastique (1) est prévue en amont de la station de formage de récipients d'emballage (II).

13. Machine d'emballage selon la revendication 11 ou 12, **caractérisée en ce que**, en liaison avec la station de scellage (IV), un film de scellage (2) est apte à être scellé par le haut sur les récipients d'emballage (3) formés et remplis en continu.
